# EUROPEAN PATENT APPLICATION

(11) **EP 4 529 026 A1**
(43) Date of publication of application: **26.03.2025**
(21) Application number: 23815147.6
(22) Date of filing: 29.05.2023
(51) Int. Cl.: H04B 3/54, H04B 3/04, H04L 47/2425, H04L 5/14

(54) **POWER LINE COMMUNICATION (PLC) METHOD AND APPARATUS**

(30) Priority: 01.06.2022 CN 202210617844
(71) Applicant: Huawei Digital Power Technologies Co., Ltd., Shenzhen, Guangdong 518043 (CN)
(72) Inventor: ZHANG, Chunqing, Shenzhen, Guangdong 518043 (CN)
(74) Representative: Maiwald GmbH
(86) International application number: PCT/CN2023/096846
(87) International publication number: WO 2023/231967

(57) **Abstract**

This application provides a power line communication (power line communication, PLC) method and apparatus. The method and apparatus are applicable to a first node in a PLC system including at least three nodes. The at least three nodes are in a full-duplex working mode. The method includes: The first node receives first information from a second node, where the second node is any node in the at least three nodes other than the first node. The first node determines, based on a priority of the second node and/or a priority of the first information, whether to interrupt transmission of second information, where the second information is information currently transmitted by the first node. In the solutions of this application, an information conflict between different nodes can be avoided, fast communication between a plurality of nodes can be implemented, and communication efficiency of the PLC system can be improved.

## Description

This application claims priority to Chinese Patent Application No. 202210617844.5, filed with the China National Intellectual Property Administration on June 1, 2022 and entitled "POWER LINE COMMUNICATION PLC METHOD AND APPARATUS", which is incorporated herein by reference in its entirety.

### TECHNICAL FIELD

Embodiments of this application relate to the field of communication technologies, and specifically, to a power line communication PLC method and apparatus.

### BACKGROUND

Power line communication (power line communication, PLC) is a power communication system that uses power transmission lines as a carrier signal transmission medium. A PCL system generally includes a plurality of nodes. To implement fast communication between the plurality of nodes, a dedicated timeslot may be generally obtained through division on a time axis to transmit low-delay data between the plurality of nodes. However, when low-delay data of a node arrives at a time point after the dedicated timeslot, the node can only transmit the data in a next dedicated timeslot. This causes a data delay, and causes a low rate of the PLC system. Generally, a backoff preemption mechanism of carrier sense multiple access (Carrier Sense Multiple Access) may also be used to implement fast communication between the plurality of nodes. However, there is a possibility that data transmitted by two nodes collides. This causes a delay or failure in data transmission, and causes the low rate of the PLC system.

### SUMMARY

Embodiments of this application provide a PLC method and apparatus, to avoid an information conflict between different nodes in a PLC system, implement fast communication between a plurality of nodes, and improve communication efficiency of the PLC system.

According to a first aspect, an embodiment of this application provides a PLC method. The method may be applied to a first node in a PLC system including at least three nodes. The at least three nodes are in a full-duplex working mode. The method includes: The first node receives first information from a second node, where the second node is any node in the at least three nodes other than the first node. The first node determines, based on a priority of the second node and/or a priority of the first information, whether to interrupt transmission of second information, where the second information is information currently transmitted by the first node.

In the solutions provided in this application, a plurality of nodes in the PLC system may be in the full-duplex working mode, that is, may receive and transmit information simultaneously. On this basis, the first node may determine, based on the priority of the second node and/or the priority of the first information from the second node, whether to interrupt transmission of current information. Interrupting transmission of the current information may actively avoid a channel resource, so that a high-priority node or high-priority information or both interrupt transmission of a low-priority node or low-priority information, and preferentially occupy the channel resource. This can resolve an information conflict between the plurality of nodes in the PLC system, reduce a transmission delay of the high-priority information, for example, a control instruction, implement fast communication between the plurality of nodes, and improve communication efficiency of the PLC system.

In a possible implementation, that the first node determines, based on a priority of the second node, whether to interrupt transmission of second information includes: When the priority of the second node is higher than a priority of the first node, the first node determines to interrupt transmission of the second information.

In the solutions provided in this application, the first node may consider only the priority of the node, and determine, based on the priority of the node, whether to interrupt transmission of the current information of the first node. Interrupting transmission of the current information can actively avoid the channel resource, so that the high-priority node can preferentially occupy the channel resource. Therefore, fast communication between the plurality of nodes can be implemented, and the communication efficiency of the PLC system can be improved.

In a possible implementation, that the first node determines, based on a priority of the first information, whether to interrupt transmission of second information includes: When the priority of the first information is higher than a priority of the second information, the first node determines to interrupt transmission of the second information.

In the solutions provided in this application, the first node may consider only the priority of the received information and the priority of the information currently transmitted by the first node, and determine, based on the priority of the information, whether to interrupt transmission of the current information of the first node. Interrupting transmission of the current information can actively avoid the channel resource, so that the high-priority information can preferentially occupy the channel resource. Therefore, fast communication between the plurality of nodes can be implemented, and communication efficiency of the PLC system can be improved.

In a possible implementation, that the first node determines, based on a priority of the second node and a priority of the first information, whether to interrupt transmission of second information includes: When the priority of the second node is higher than a priority of the first node, and the priority of the first information is higher than a priority of the second information, the first node determines to interrupt transmission of the second information; when the priority of the second node is equal to a priority of the first node, and the priority of the first information is higher than a priority of the second information, the first node determines to interrupt transmission of the second information; or when the priority of the second node is higher than a priority of the first node, and the priority of the first information is equal to a priority of the second information, the first node determines to interrupt transmission of the second information.

In the solutions provided in this application, the first node may consider both the priority of the node and the priority of the information, and determine, based on the priority of the node and the priority of the information, whether to interrupt transmission of the current information of the first node. Interrupting transmission of the current information can actively avoid the channel resource, so that the high-priority node and the high-priority information can preferentially occupy the channel resource. Therefore, fast communication between the plurality of nodes can be implemented, and communication efficiency of the PLC system can be improved.

In a possible implementation, that the first node determines, based on a priority of the second node and a priority of the first information, whether to interrupt transmission of second information includes: When the priority of the second node is lower than a priority of the first node, the priority of the first information is higher than a priority of the second information, and the first information is first-type information, the first node determines to interrupt transmission of the second information.

In the solutions provided in this application, the first node may consider both the priority of the node and the priority of the information, may further consider a type of the information, and determine, based on the priority of the node, the priority of the information, and the type of the information, whether to interrupt transmission of the current information of the first node. Interrupting transmission of the current information can actively avoid the channel resource, so that the high-priority node and the high-priority information can preferentially occupy the channel resource. Therefore, fast communication between the plurality of nodes can be implemented, and communication efficiency of the PLC system can be improved.

In a possible implementation, that the first node determines, based on a priority of the second node and a priority of the first information, whether to interrupt transmission of second information includes: When the priority of the second node is lower than a priority of the first node, the priority of the first information is higher than a priority of the second information, and the first information is second-type information, the first node determines not to interrupt transmission of the second information.

In the solutions provided in this application, the first node may consider both the priority of the node and the priority of the information, may further consider the type of the information, and determine, based on the priority of the node, the priority of the information, and the type of the information, whether to interrupt transmission of the current information of the first node. Interrupting transmission of the current information can actively avoid the channel resource, so that the high-priority node and the high-priority information can preferentially occupy the channel resource. Therefore, fast communication between the plurality of nodes can be implemented, and communication efficiency of the PLC system can be improved.

In a possible implementation, the method further includes: The first node resumes transmission of the second information after preset time.

In a possible implementation, the method further includes: The first node determines the priority of the second node based on any one of a media access control (media access control, MAC) address, an internet protocol (Internet Protocol, IP) address, or a network identifier of the second node.

According to a second aspect, an embodiment of this application provides a PLC apparatus. The apparatus may be a first node in a PLC system including at least three nodes, or may be an apparatus (for example, a chip, a chip system, or a circuit) in the first node. The at least three nodes are in a full-duplex working mode. The communication apparatus has a function of implementing behavior in the method example in the first aspect. The function may be implemented by hardware, or may be implemented by hardware executing corresponding software. The hardware or the software includes one or more modules corresponding to the function.

In a possible implementation, the apparatus includes:
a transceiver unit, configured to receive first information from a second node, where the second node is any node in the at least three nodes other than the first node; and
a processing unit, configured to determine, based on a priority of the second node and/or a priority of the first information, whether to interrupt transmission of second information, where the second information is information currently transmitted by the first node.

In a possible implementation, the processing unit is specifically configured to: when the priority of the second node is higher than a priority of the first node, determine to interrupt transmission of the second information.

In a possible implementation, the processing unit is specifically configured to: when the priority of the first information is higher than a priority of the second information, determine to interrupt transmission of the second information.

In a possible implementation, the processing unit is specifically configured to:
when the priority of the second node is higher than a priority of the first node, and the priority of the first information is higher than a priority of the second information, determine to interrupt transmission of the second information;
when the priority of the second node is equal to a priority of the first node, and the priority of the first information is higher than a priority of the second information, determine to interrupt transmission of the second information; or
when the priority of the second node is higher than a priority of the first node, and the priority of the first information is equal to a priority of the second information, determine to interrupt transmission of the second information.

In a possible implementation, the processing unit is specifically configured to: when the priority of the second node is lower than a priority of the first node, the priority of the first information is higher than a priority of the second information, and the first information is first-type information, determine to interrupt transmission of the second information.

In a possible implementation, the processing unit is specifically configured to: when the priority of the second node is lower than a priority of the first node, the priority of the first information is higher than a priority of the second information, and the first information is second-type information, determine not to interrupt transmission of the second information.

In a possible implementation, the processing unit is further configured to resume transmission of the second information after preset time.

In a possible implementation, the processing unit is further configured to determine the priority of the second node based on any one of a MAC address, an IP address, and a network identifier of the second node.

According to a third aspect, an embodiment of this application provides a PLC apparatus. The apparatus may be a first node in a PLC system including at least three nodes, or may be an apparatus (for example, a chip, a chip system, or a circuit) in the first node. The at least three nodes are in a full-duplex working mode. The apparatus includes a processor and a memory. The processor is coupled to the memory. The memory is configured to store a program or instructions. When the program or the instructions are executed by the processor, the apparatus is enabled to perform the method provided in any one of the first aspect or the implementations of the first aspect.

According to a fourth aspect, an embodiment of this application provides a PLC system. The PLC system includes the apparatus provided in the second aspect or the third aspect.

According to a fifth aspect, an embodiment of this application provides a computer-readable storage medium. The computer-readable storage medium stores a computer program or computer instructions. When the computer program or the computer instructions are run, the method provided in any one of the first aspect or the implementations of the first aspect is implemented.

According to a sixth aspect, an embodiment of this application provides a computer program product. The computer program product includes computer program code. When the computer program code is run, the method provided in any one of the first aspect or the implementations of the first aspect is implemented.

### BRIEF DESCRIPTION OF DRAWINGS

FIG. 1 is a diagram of timeslot division;
FIG. 2 is a diagram of a system architecture according to an embodiment of this application;
FIG. 3 is a diagram of a principle of a node based on full-duplex PLC;
FIG. 4 is an interaction flowchart of a PLC method according to an embodiment of this application;
FIG. 5 to FIG. 10 are diagrams of scenarios of performing a method according to an embodiment of this application;
FIG. 11 is a diagram of a structure of a PLC apparatus according to an embodiment of this application; and
FIG. 12 is a diagram of a structure of a PLC apparatus according to an embodiment of this application.

### DESCRIPTION OF EMBODIMENTS

Embodiments of the present invention provide a PLC method and apparatus, to avoid information conflict between different nodes in a PLC system, implement fast communication between a plurality of nodes, and improve communication efficiency of the PLC system. The following describes the technical solutions in embodiments of the present invention with reference to the accompanying drawings in embodiments of the present invention. It is clear that the described embodiments are merely a part rather than all of embodiments of the present invention.

To facilitate understanding of embodiments of this application, technical problems to be specifically resolved in this application are further analyzed and proposed.

Full-duplex communication is a duplex technology widely applied to wired and wireless communication. In a wireless communication system, full-duplex communication may be implemented through time division duplex (time division duplex, TDD), frequency division duplex (frequency division duplex, FDD), and in-band full-duplex (In-Band Full-Duplex, IBFD) communication. In TDD, both communication parties may use different timeslots to distinguish between uplink and downlink, to implement full-duplex communication. In this case, both communication parties use a same frequency, that is, one party can only be in a transmission or receiving state at a time point. Therefore, transmission or receiving of a communication node is discontinuous and needs to be performed alternately. In FDD, different frequencies are used to distinguish between uplink and downlink. Both communication parties may perform transmission and receiving simultaneously, but frequencies used in transmission and receiving directions are different. In in-band full-duplex (In-Band Full-Duplex, IBFD) communication, both communication parties use a same frequency to transmit and receive a signal simultaneously. IBFD can improve spectrum utilization efficiency, and can also resolve the discontinuous transmission and receiving in TDD communication.

Power line carrier communication is a power communication system that uses power transmission lines as a carrier signal transmission medium. The power transmission lines have become a necessary infrastructure for power transmission and consumption in modern society. Therefore, carrier communication based on existing power transmission lines does not need additional communication cabling costs, and has a plurality of advantages such as wide coverage, high cost-effectiveness, and reliability. However, power transmission lines are not conducive to propagation of all communication carrier signals. It is generally considered that a higher frequency of a carrier signal indicates a larger increase in a propagation loss after a signal passes through a line. Therefore, common power line carrier communication uses a low communication frequency band. For example, according to the standard of the G3-PLC alliance, a communication frequency band lower than 500 kHz is used, and according to the IEEE1901.1 international standard, a communication frequency band lower than 12 MHz is used. A limited available spectrum may cause a decrease in a communication rate. For example, the G3-PLC standard supports only a low rate less than 100 kbps. A low communication rate is not conducive to some applications that need low-delay fast control. In addition, most current PLC systems use a time division multiplexing (TDD) power line mechanism, and consequently, it is difficult to achieve a target of a low delay.

To resolve a problem of a low PLC rate, full-duplex PLC in which receiving and transmission are performed simultaneously can be implemented based on a method using echo cancellation in an analog domain and self-interference signal cancellation in a digital domain. Performing receiving and transmission simultaneously can improve a throughput rate of a full-duplex PLC system. However, after the throughput rate of the system is improved, a problem of implementing fast control between a plurality of nodes is still not resolved.

Currently, for the technical solutions of the PLC in which fast control between the plurality of nodes is implemented, the following two solutions are listed as examples.

Solution 1: Use a fixed TDD timeslot.

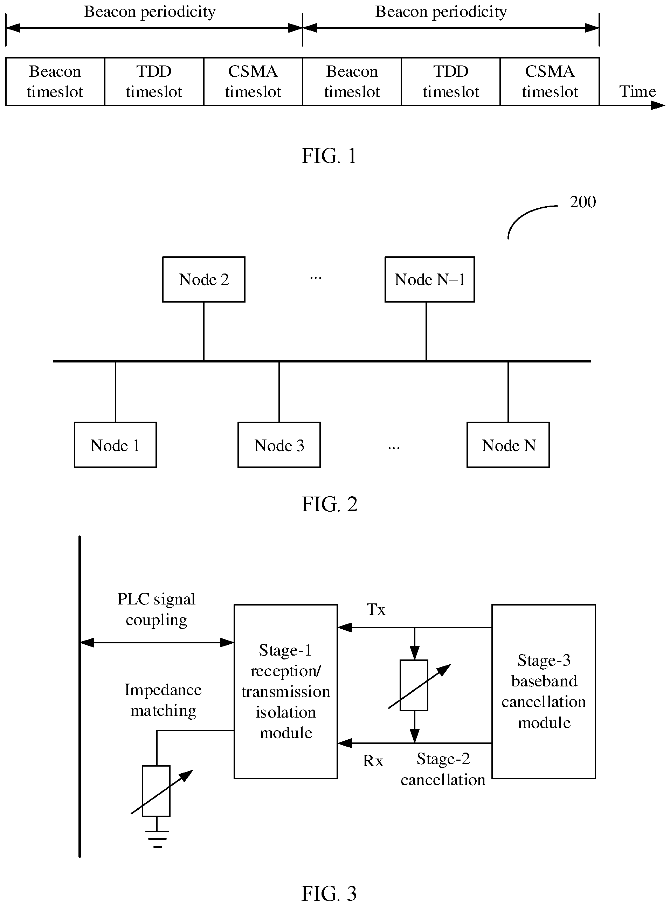

Several types of timeslots are defined in the P1901.1 protocol. As shown in FIG. 1, each beacon periodicity includes a beacon timeslot, a TDD timeslot, and a carrier sense multiple access (carrier sense multiple access, CSMA) timeslot. A specific TDD timeslot in each beacon periodicity may be used for transmitting low-delay data or a control instruction. That is, on a time axis, a series of dedicated TDD timeslots are obtained through division specially for each node to transmit the low-delay data or the control instruction. For example, when a node needs to transmit the control instruction, the node may transmit the control instruction only after a special TDD timeslot allocated to the node arrives.

Disadvantages of Solution 1: in Solution 1, the dedicated TDD timeslots are obtained through division on the time axis for transmitting a fast control instruction or low-delay data. However, (1) the system needs to reserve a dedicated TDD timeslot for a control instruction that may be transmitted. When the control instruction arrives at a time point after the TDD timeslot, the communication node can transmit the control instruction only after a next TDD timeslot arrives. This causes a delay of the control instruction. In addition, a delay value depends on a length of the beacon periodicity, and the delay value is larger when the length of the beacon periodicity is longer. (2) When no control instruction is transmitted, the TDD timeslot reserved in advance is wasted, and consequently, a rate of the PLC system in which a bandwidth resource is originally limited is lower.

Solution 2: Use different backoff delay values to ensure that a high-priority node preempts a channel in advance.

In this solution, the control instruction does not need to be transmitted in the dedicated TDD timeslot, but the control instruction needs to use a channel with another service data frame in a preemption manner based on a CSMA mechanism. That is, before transmitting the control instruction, a node needs to first listen to the channel, and when the channel is idle, transmit the control instruction by using a mechanism of preempting the channel after backing off for random time. For the node that transmits the control instruction, a small backoff time value may be selected, so that the node may preferentially use the channel.

Disadvantages of Solution 2: Solution 2 improves some disadvantages of Solution 1, for example, in Solution 2, the TDD timeslot does not need to be wasted, so that bandwidth utilization efficiency is improved. However, because Technical solution 2 uses the preemption manner, that is, if a node preempts the channel first, another node needs to wait until the channel is idle, the following disadvantages exist: (1) When data is being transmitted on the channel, a high-priority control instruction can preempt the channel by using the high priority only after the channel is idle. This causes a control delay. (2) In a backoff preemption mechanism of the CSMA, there is a case in which data transmitted by two nodes collides. When the data and the control instruction collide on the channel, the control instruction fails to be transmitted, and the control delay is caused. In severe cases, the control may fail. In addition, this collision probability increases with an increase in a quantity of nodes participating in communication in a network. This causes uncertainty of a control instruction transmission delay.

Therefore, this application needs to resolve the following technical problems.

In a multi-node PLC system, based on full-duplex communication, each node may normally receive data from another node while transmitting data. Based on this feature, a mechanism of controlling and interrupting transmission between the plurality of nodes based on a priority is performed, to ensure that a high-priority node and low-delay data thereof can preferentially occupy the channel, avoid an information conflict between different nodes, implement fast communication between the plurality of nodes, and improve communication efficiency of the PLC system.

Based on the foregoing descriptions, this application provides a PLC method and apparatus. FIG. 2 is a diagram of a system architecture according to an embodiment of this application. As shown in FIG. 2, the system architecture 200 may include at least three nodes (for example, a node 1 to a node N shown in the figure). The at least three nodes communicate with each other by using a same channel.

Each node in the at least three nodes may be in a full-duplex mode (for example, an FDD mode or an IBFD mode, that is, each node may receive and transmit data simultaneously). For example, FIG. 3 is a diagram of a principle of a node based on full-duplex PLC. As shown in FIG. 3, the node based on full-duplex PLC may include modules such as a PLC signal coupling module, an impedance matching module, a stage-1 reception/transmission isolation module, a stage-2 cancellation module, and a stage-3 baseband cancellation module. The stage-1 reception/transmission isolation module may be implemented by using a transformer or another similar circuit. When impedance of an impedance matching end is equivalent to impedance of a PLC signal coupling end, isolation of a self-interference signal may be formed between Tx and Rx. After stage-1 isolation, a residual self-interference signal enters an Rx channel. In this case, a stage-2 cancellation circuit in an analog domain is designed in the figure. That is, after an original Tx signal passes through an adjustable shaping circuit, a radio frequency signal that has a same amplitude and an opposite direction and that may cancel the residual self-interference signal is generated, the radio frequency signal is superposed with a signal in the Rx channel, and then effect of canceling the residual self-interference signals is generated. Finally, there are still a small quantity of residual self-interference signals that cannot be completely canceled and enter a baseband receiving channel, and the residual self-interference signals may be estimated in a digital domain by using a baseband processing algorithm, to perform stage-3 cancellation. After the stage-3 self-interference signal cancellation, a transmit signal in a Tx channel does not interfere with normal receiving of the signal in the Rx channel, so that a full-duplex transceiver node that performs transmission and receiving simultaneously is implemented.

The at least three nodes include a first node and a second node. The second node is any node in the at least three nodes other than the first node. Different nodes may have a same priority or different priorities. The first node and the second node may be nodes of a plurality of types in a PLC system. For example, in the G.hn standard related to a PLC network, the first node and the second node may be a domain master (domain master, DM) or a end point (end point, EP) in the PLC system. In the IEEE 1901.1 standard related to the PLC network, the first node and the second node may be a central coordinator (central coordinator, CCO) or a station (station, STA) in the PLC system. It should be noted that the first node and the second node may alternatively be nodes of other types. This is not limited in this application. The first node and the second node may be of a same type or different types. For example, the first node is the DM, and the second node is the EP; or the first node is the CCO, and the second node is the STA. This is not limited in this application.

It should be noted that this embodiment of this application is not only applicable to a PLC system, but is also applicable to any full-duplex communication system.

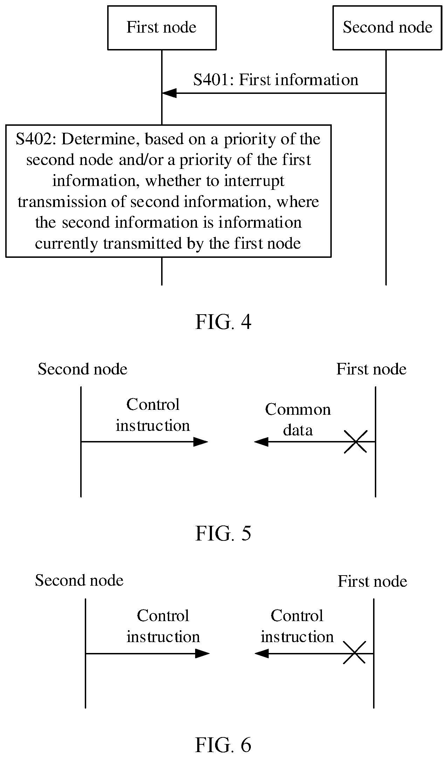

With reference to the foregoing system architecture, the following describes a PLC method provided in an embodiment of this application. FIG. 4 is an interaction flowchart of a PLC method according to an embodiment of this application. The PLC method may be applied to a first node in a PLC system including at least three nodes. The at least three nodes are in a full-duplex working mode, for example, an IBFD mode in which nodes work simultaneously in a same frequency band or an FDD mode in which nodes work simultaneously in different frequency bands. That is, each node may transmit and receive information simultaneously. As shown in FIG. 4, the PLC method may include the following steps.

Step S401: A second node transmits first information to the first node.

Correspondingly, the first node receives the first information from the second node.

The second node is any node in the at least three nodes other than the first node. The first information may be data or a control instruction. In this embodiment of this application, a priority of the control instruction is higher than a priority of the data.

The second node may transmit the first information to the first node in a broadcast or unicast manner.

Step S402: The first node determines, based on a priority of the second node and/or a priority of the first information, whether to interrupt transmission of second information, where the second information is information currently transmitted by the first node.

After receiving the first information from the second node, the first node may determine, based on the priority of the second node and/or the priority of the first information, whether to interrupt transmission of the second information. Specific implementations may be as follows.

Manner 1: The first node determines, based on the priority of the second node, whether to interrupt transmission of the second information. Specifically, when the priority of the second node is higher than a priority of the first node, the first node determines to interrupt transmission of the second information. In this manner, different nodes may have different priorities. In the IBFD mode, both the first node and the second node work in a same frequency band. Because the priority of the second node is higher than that of the first node, after receiving the first information from the second node, the first node may interrupt transmission of current information of the first node, so that the second node can exclusively occupy a power line channel. In the FDD mode, the first node and the second node work in different frequency bands, the second information transmitted by the first node and the first information transmitted by the second node do not interfere with each other, and the first node may determine not to interrupt transmission of current information of the first node.

Optionally, the first node may determine the priority of the second node based on any one of a MAC address, an IP address, or a network identifier of the second node. The network identifier may be a network identifier (identifier, ID) formed by a node during networking. The identification information may be carried in a header or a preamble sequence of a packet of the first information in a specific form. For example, the preamble sequence is shifted based on the priority, nodes with different priorities may use different preamble sequences, a priority flag is carried in the header of the packet of the first information, or the like.

Manner 2: The first node determines, based on the priority of the first information, whether to interrupt transmission of the second information. Specifically, when the priority of the first information is higher than a priority of the second information, the first node determines to interrupt transmission of the second information. In this manner, different information may have different priorities. In the IBFD mode, both the first node and the second node work in a same frequency band. Because the priority of the first information is higher than that of the second information, after receiving the first information from the second node, the first node may interrupt transmission of the second information of the first node, so that the first information can exclusively occupy a power line channel and can be preferentially transmitted. In the FDD mode, the first node and the second node work in different frequency bands, the second information transmitted by the first node and the first information transmitted by the second node do not interfere with each other, and the first node may determine not to interrupt transmission of current information of the first node.

Optionally, the first node may determine the priority of the first information based on any one of the following corresponding to the first information: a service type, a transmission mode, or an information type. An identifier indicating the service type may be carried in a header or a preamble sequence of a packet of the first information. For example, an information priority of a real-time service is higher than an information priority of a non-real-time service. For another example, the first node may determine the priority of the first information based on the transmission mode of the first information. For example, a priority of the first information transmitted in a broadcast manner is higher than that of the first information transmitted in a unicast manner. For another example, the first information may be the control instruction or the data, and the priority of the control instruction is higher than the priority of the data.

Manner 3: The first node determines, based on the priority of the second node and the priority of the first information, whether to interrupt transmission of the second information.

In a possible implementation, when the priority of the second node is higher than a priority of the first node, and the priority of the first information is higher than a priority of the second information, the first node determines to interrupt transmission of the second information. As shown in FIG. 5, the priority of the second node is higher than the priority of the first node. An example in which the first information is the control instruction, and the second information is common data is used for description. In the IBFD mode, when receiving the control instruction from the second node, the first node may determine that the priority of the second node is higher than the priority of the first node, and the priority of the control instruction is higher than that of the common data. Therefore, the first node may interrupt transmission of current common data of the first node, so that the second node can exclusively occupy a power line channel, to ensure that the control instruction transmitted by the second node is preferentially transmitted. In an embodiment, the control instruction of the second node is broadcast to all nodes. When the second node interrupts transmission of the current common data of the second node, the second node may exclusively occupy the power line channel, to ensure that the control instruction transmitted by the second node is received by another node in the PLC system. In the FDD mode, frequency bands are different, and the first node may still normally transmit the common data without interrupting transmission of the current common data of the first node.

In a possible implementation, when the priority of the second node is equal to the priority of the first node, and the priority of the first information is higher than the priority of the second information, the first node determines to interrupt transmission of the second information. As shown in FIG. 5, the priority of the second node is equal to the priority of the first node. An example in which the first information is the control instruction, and the second information is common data is used for description. In the IBFD mode, when receiving the control instruction from the second node, the first node may determine that the priority of the control instruction is higher than that of the common data. Therefore, the first node may interrupt transmission of the current common data of the first node, so that the second node can exclusively occupy a power line channel, to ensure that the control instruction transmitted by the second node is preferentially transmitted. In the FDD mode, frequency bands are different, and the first node may still normally transmit the common data without interrupting transmission of the current common data of the first node.

In a possible implementation, when the priority of the second node is higher than the priority of the first node, and the priority of the first information is equal to the priority of the second information, the first node determines to interrupt transmission of the second information. As shown in FIG. 6, the priority of the second node is higher than the priority of the first node. An example in which the first information is the control instruction, and the second information is the control instruction is used for description. In the IBFD mode, when receiving the control instruction from the second node, the first node may determine that the priority of the second node is higher than the priority of the first node. Therefore, the first node may interrupt transmission of a current control instruction of the first node, so that the second node can exclusively occupy a power line channel, to ensure that the control instruction transmitted by the second node is preferentially transmitted. In the FDD mode, frequency bands are different, and the first node may still normally transmit the control instruction without interrupting transmission of the current control instruction of the first node.

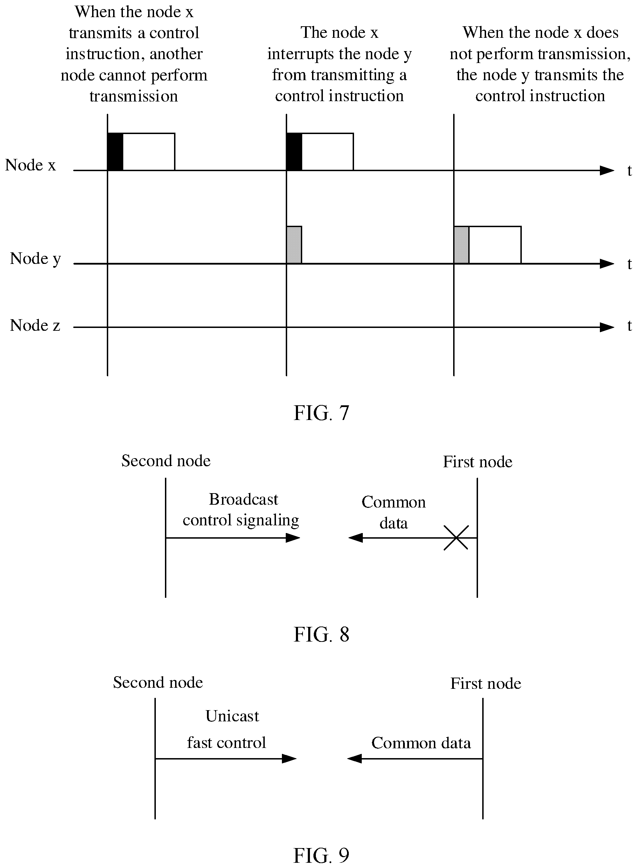

As shown in FIG. 7, for example, the PLC system includes three nodes: a node x, a node y, and a node z, where the node x has a highest priority. FIG. 7 shows an example of a contention-based transmission relationship of the three nodes in three time segments. (1) In a first time segment, only the node x needs to transmit a control instruction. In this case, other nodes (the node y and the node z) stop transmitting information. (2) In a second time segment, the node x and the node y transmit control instructions simultaneously, and a collision is caused. In this case, the node y determines, based on a frame header of the control instruction, that a priority of the node y is lower than that of the node x, and the node y interrupts continuous transmission of the control instruction of the node y. (3) In a third time segment after the node x transmits the control instruction, because the node x does not need to perform transmission, the node y exclusively occupies the channel, and may transmit the control instruction.

In a possible implementation, when the priority of the second node is lower than the priority of the first node, the priority of the first information is higher than the priority of the second information, and the first information is first type information, the first node determines to interrupt transmission of the second information. As shown in FIG. 8, the priority of the second node is lower than the priority of the first node. An example in which the first information is the control instruction, and the second information is the common data is used for description. In the IBFD mode, when receiving the control instruction from the second node, the first node may determine that the priority of the second node is lower than the priority of the first node, the priority of the control instruction is higher than the priority of the common data, and the control instruction is broadcast (that is, all the nodes need to receive the control instruction of the second node). The first node may interrupt transmission of the current common data of the first node, so that the second node can exclusively occupy the power line channel, to ensure that the control instruction transmitted by the second node is received by all other nodes.

In a possible implementation, when the priority of the second node is lower than the priority of the first node, the priority of the first information is higher than the priority of the second information, and the first information is second-type information, the first node determines not to interrupt transmission of the second information. As shown in FIG. 9, the priority of the second node is lower than the priority of the first node. An example in which the first information is the control instruction, and the second information is the common data is used for description. In the IBFD mode, when receiving the control instruction from the second node, the first node may determine that the priority of the second node is lower than the priority of the first node, the priority of the control instruction is higher than the priority of the common data, and the control instruction is unicast (that is, the second node transmits the control instruction to only the first node). The first node may not interrupt transmission of the current common data of the first node. In the FDD mode, the frequency bands are different, and the first node can transmit the common data while receiving the control instruction from the second node.

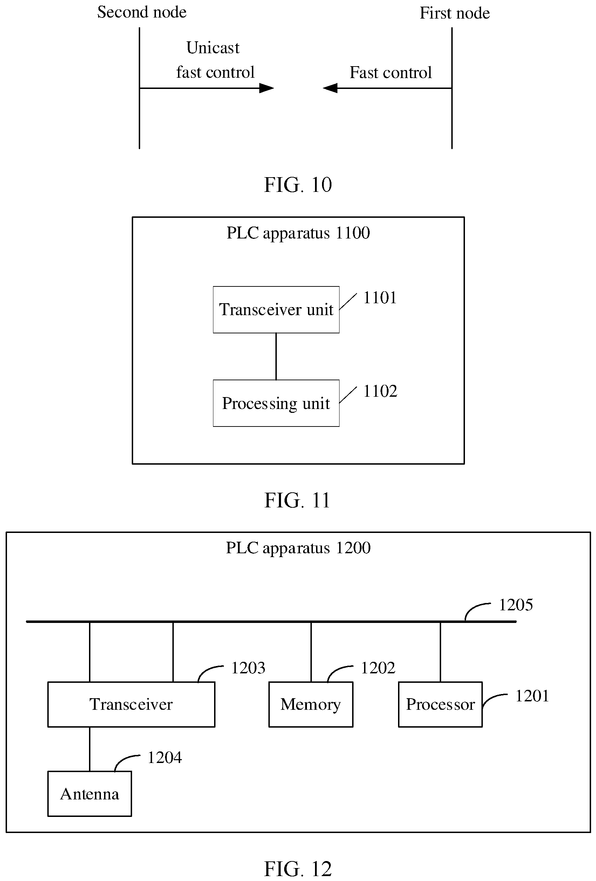

In a possible implementation, when the priority of the second node is lower than the priority of the first node, the priority of the first information is equal to the priority of the second information, and the first information is the second-type information, the first node determines not to interrupt transmission of the second information. As shown in FIG. 10, the priority of the second node is lower than the priority of the first node. An example in which the first information is the control instruction, and the second information is the control instruction is used for description. In the IBFD mode, when receiving the control instruction from the second node, the first node may determine that the priority of the second node is lower than the priority of the first node, and the control instruction is unicast (that is, the second node transmits the control instruction to only the first node). The first node may not interrupt transmission of the current control instruction of the first node. In the FDD mode, the frequency bands are different, and the first node can transmit the control instruction while receiving the control instruction from the second node.

Further, optionally, if the first node determines to interrupt transmission of the second information, the first node may further resume transmission of the second information after preset time.

In this embodiment of this application, a plurality of nodes in the PLC system may be in the full-duplex working mode, that is, may receive and transmit information simultaneously. On this basis, the first node may determine, based on the priority of the second node and/or the priority of the first information from the second node, whether to interrupt transmission of current information. Interrupting transmission of the current information may actively avoid a channel resource, so that a high-priority node or high-priority information or both interrupt transmission of a low-priority node or low-priority information, and preferentially occupy the channel resource. This can resolve an information conflict between the plurality of nodes in the PLC system, reduce a transmission delay of the high-priority information, implement fast communication between the plurality of nodes, and improve communication efficiency of the PLC system.

The foregoing describes the method embodiments provided in embodiments of this application, and the following describes the apparatus embodiments related to embodiments of this application. An apparatus and a related product provided in this application include but are not limited to electronic devices such as a communication server, a router, a switch, a bridge, a computer, a mobile phone, a watch, a headset, a television, and a home.

FIG. 11 is a diagram of a structure of a PLC apparatus according to an embodiment of this application. The apparatus may be a first node in a PLC system including at least three nodes, or may be an apparatus (for example, a chip, a chip system, or a circuit) in a first node. The at least three nodes are in a full-duplex working mode. The communication apparatus has a function of implementing behavior in the method example in the first aspect. The function may be implemented by hardware, or may be implemented by hardware executing corresponding software. The hardware or the software includes one or more modules corresponding to the function. As shown in FIG. 11, the apparatus 1100 includes at least a transceiver unit 1101 and a processing unit 1102.

The transceiver unit 1101 is configured to receive first information from a second node, where the second node is any node in the at least three nodes other than the first node.

The processing unit 1102 is configured to determine, based on a priority of the second node and/or a priority of the first information, whether to interrupt transmission of second information, where the second information is information currently transmitted by the first node.

In an embodiment, the processing unit 1102 is specifically configured to: when the priority of the second node is higher than a priority of the first node, determine to interrupt transmission of the second information.

In an embodiment, the processing unit 1102 is specifically configured to: when the priority of the first information is higher than a priority of the second information, determine to interrupt transmission of the second information.

In an embodiment, the processing unit 1102 is specifically configured to:
when the priority of the second node is higher than the priority of the first node, and the priority of the first information is higher than the priority of the second information, determine to interrupt transmission of the second information;
when the priority of the second node is equal to the priority of the first node, and the priority of the first information is higher than the priority of the second information, determine to interrupt transmission of the second information; or
when the priority of the second node is higher than the priority of the first node, and the priority of the first information is equal to the priority of the second information, determine to interrupt transmission of the second information.

In an embodiment, the processing unit 1102 is specifically configured to: when the priority of the second node is lower than the priority of the first node, the priority of the first information is higher than the priority of the second information, and the first information is first-type information, determine to interrupt transmission of the second information.

In an embodiment, the processing unit 1102 is specifically configured to: when the priority of the second node is lower than the priority of the first node, the priority of the first information is higher than the priority of the second information, and the first information is second-type information, determine not to interrupt transmission of the second information.

In an embodiment, the processing unit 1102 is further configured to resume transmission of the second information after preset time.

In an embodiment, the processing unit 1102 is further configured to determine the priority of the second node based on any one of a MAC address, an IP address, and a network identifier of the second node.

For more detailed descriptions of the transceiver unit 1101 and the processing unit 1102, directly refer to descriptions related to the first node in the method embodiments shown in FIG. 4 to FIG. 10. Details are not described herein again.

FIG. 12 is a diagram of a structure of a PLC apparatus according to an embodiment of this application. As shown in FIG. 12, an apparatus 1200 may include a processor 1201. The processor 1201 may also be referred to as a processing unit, and may implement a specific control function. The processor 1201 may be a general-purpose processor, a dedicated processor, or the like.

In an optional design, the processor 1201 may alternatively store instructions and/or data. The instructions and/or data may be run by the processor, so that the apparatus 1200 performs the method described in the foregoing method embodiments.

In another optional design, the processor 1201 may include a transceiver unit configured to implement receiving and transmission functions. For example, the transceiver unit may be a transceiver circuit, an interface, an interface circuit, or a communication interface. The transceiver circuit, the interface, or the interface circuit configured to implement the receiving and transmission functions may be separated, or may be integrated together. The transceiver circuit, the interface, or the interface circuit may be configured to read and write code/data. Alternatively, the transceiver circuit, the interface, or the interface circuit may be configured to transmit or transfer a signal.

In another possible design, the apparatus 1200 may include a circuit. The circuit may implement a transmission, receiving, or communication function in the foregoing method embodiments.

Optionally, the apparatus 1200 may include one or more memories 1202. The memory 1202 may store instructions. The instructions may be run on the processor 1201, so that the apparatus 1200 performs the method described in the foregoing method embodiments. Optionally, the memory may further store data. Optionally, the processor may also store the instructions and/or data. The processor and the memory may be separately disposed, or may be integrated together. For example, a correspondence described in the foregoing method embodiments may be stored in the memory or stored in the processor.

Optionally, the apparatus 1200 may further include a transceiver 1203 and/or an antenna 1204. The transceiver 1203 may be referred to as a transceiver unit, a transceiver machine, a transceiver circuit, a transceiver apparatus, a transceiver module, or the like, and is configured to implement the receiving and transmission functions. Optionally, the apparatus 1200 may further include a bus 1205. The processor 1201, the memory 1202, and the transceiver 1203 may be coupled through the bus.

The processor and the transceiver that are described in this application may be implemented on an integrated circuit (integrated circuit, IC), an analog IC, a radio frequency integrated circuit (radio frequency interface chip, RFIC), a mixed-signal IC, an application-specific integrated circuit (application-specific integrated circuit, ASIC), a printed circuit board (printed circuit board, PCB), an electronic device, or the like. The processor and the transceiver may also be manufactured by using various IC technologies, for example, a complementary metal oxide semiconductor (complementary metal oxide semiconductor, CMOS), an N-type metal oxide semiconductor (n metal-oxide-semiconductor, NMOS), a P-type metal oxide semiconductor (positive channel metal oxide semiconductor, PMOS), a bipolar junction transistor (Bipolar Junction Transistor, BJT), a bipolar CMOS (BiCMOS), silicon-germanium (SiGe), and gallium arsenide (GaAs).

The apparatus described in the foregoing embodiment may be a first node, but a scope of the apparatus described in this application is not limited thereto, and a structure of the apparatus may not be limited by FIG. 12. The apparatus may be an independent device or may be a part of a large device. For example, the apparatus may be:
(1) an independent integrated IC, a chip, or a chip system or subsystem;
(2) a set including one or more ICs, where optionally, the IC set may also include a storage component configured to store data and/or instructions;
(3) an ASIC, for example, a modem (MSM);
(4) a module that can be embedded in another device; or
(5) others.

An embodiment of this application further provides a computer-readable storage medium. The computer-readable storage medium stores a computer program. When the program is executed by a processor, the PLC methods provided in the foregoing method embodiments can be implemented.

An embodiment of this application further provides a computer program product. When the computer program product is run on a computer or a processor, the computer or the processor is enabled to perform one or more steps in any one of the foregoing PLC methods. When the foregoing modules in the device are implemented in a form of a software functional unit and sold or used as an independent product, the modules may be stored in a computer-readable storage medium.

An embodiment of this application further provides a chip system. The chip system includes at least one processor and a communication interface. The communication interface and the at least one processor are interconnected through a line. The at least one processor is configured to run a computer program or instructions, to perform some or all steps described in any one method described in the foregoing method embodiments corresponding to FIG. 4 to FIG. 10. The chip system may include a chip, or may include a chip and another discrete component.

An embodiment of this application further discloses a PLC system. The system includes a first node and a second node. For specific descriptions, refer to the PLC methods shown in FIG. 4 to FIG. 10.

It should be understood that the memory mentioned in embodiments of this application may be a volatile memory or a non-volatile memory, or may include both a volatile memory and a non-volatile memory. The non-volatile memory may be a hard disk drive (hard disk drive, HDD), a solid-state drive (solid-state drive, SSD), a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), and is used as an external cache. By way of example but not limitative description, a plurality of forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). The memory is any other medium that can be configured to carry or store expected program code in a form of an instruction or a data structure and that can be accessed by a computer. However, this is not limited thereto. The memory in this embodiment of this application may alternatively be a circuit or any other apparatus that can implement a storage function, and is configured to store program instructions and/or data.

It should be further understood that the processor provided in embodiments of this application may be a central processing unit (central processing unit, CPU), or may be further another general-purpose processor, a digital signal processor (digital signal processor, DSP), an application-specific integrated circuit (application-specific integrated circuit, ASIC), a field-programmable gate array (field-programmable gate array, FPGA) or another programmable logic device, a discrete gate or transistor logic device, a discrete hardware component, or the like. The general-purpose processor may be a microprocessor, or the processor may be any conventional processor or the like.

It should be noted that when the processor is the general-purpose processor, the DSP, the ASIC, the FPGA or another programmable logic device, the discrete gate or transistor logic device, or the discrete hardware component, the memory (a storage module) may be integrated into the processor.

It should be noted that the memory described herein is intended to include but not limited to these memories and any memory of another appropriate type.

It should be understood that, in various embodiments of this application, sequence numbers of the foregoing processes do not mean execution sequences. The execution sequences of the processes should be determined based on functions and internal logic of the processes, and should not constitute any limitation on implementation processes of embodiments of this application.

A person of ordinary skill in the art may be aware that units and algorithm steps in examples described with reference to embodiments provided in this specification can be implemented by electronic hardware or a combination of computer software and electronic hardware. Whether these functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiments are merely examples. For example, division into the units is merely logical function division and may be other division in actual implementation. For example, a plurality of units or components may be combined or integrated into another system, or some features may be ignored or not performed. In addition, the displayed or discussed mutual couplings, direct couplings, or communication connections may be implemented through some interfaces. Indirect couplings or communication connections between apparatuses or units may be implemented in an electrical form, a mechanical form, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, or a network device) to perform all or some of the steps of the methods in embodiments of this application. The foregoing storage medium includes any medium that can store program code, such as a USB flash drive, a removable hard disk, a ROM, a RAM, a magnetic disk, or an optical disc.

A sequence of the steps of the method in embodiments of this application may be adjusted, combined, or deleted according to an actual requirement.

Modules/units in the apparatus in embodiments of this application may be combined, divided, and deleted according to an actual requirement.

The foregoing embodiments are merely intended for describing the technical solutions of this application, rather than limiting the technical solutions of this application. Although this application is described in detail with reference to the foregoing embodiments, a person of ordinary skill in the art should understand that they may still make modifications to the technical solutions described in the foregoing embodiments or make equivalent replacements to some technical features thereof, without departing from the scope of the technical solutions of embodiments of this application.

## Claims

1. A power line communication PLC method, applied to a first node in a PLC system comprising at least three nodes, wherein the at least three nodes are in a full-duplex working mode, and the method comprises:
receiving, by the first node, first information from a second node, wherein the second node is any node in the at least three nodes other than the first node; and
determining, by the first node based on a priority of the second node and/or a priority of the first information, whether to interrupt transmission of second information, wherein the second information is information currently transmitted by the first node.

2. The method according to claim 1, wherein the determining, by the first node based on a priority of the second node, whether to interrupt transmission of second information comprises:
when the priority of the second node is higher than a priority of the first node, determining, by the first node, to interrupt transmission of the second information.

3. The method according to claim 1, wherein the determining, by the first node based on a priority of the first information, whether to interrupt transmission of second information comprises:
when the priority of the first information is higher than a priority of the second information, determining, by the first node, to interrupt transmission of the second information.

4. The method according to claim 1, wherein the determining, by the first node based on a priority of the second node and a priority of the first information, whether to interrupt transmission of second information comprises:
when the priority of the second node is higher than a priority of the first node, and the priority of the first information is higher than a priority of the second information, determining, by the first node, to interrupt transmission of the second information;
when the priority of the second node is equal to a priority of the first node, and the priority of the first information is higher than a priority of the second information, determining, by the first node, to interrupt transmission of the second information; or
when the priority of the second node is higher than a priority of the first node, and the priority of the first information is equal to a priority of the second information, determining, by the first node, to interrupt transmission of the second information.

5. The method according to claim 1, wherein the determining, by the first node based on a priority of the second node and a priority of the first information, whether to interrupt transmission of second information comprises:
when the priority of the second node is lower than a priority of the first node, the priority of the first information is higher than a priority of the second information, and the first information is first-type information, determining, by the first node, to interrupt transmission of the second information.

6. The method according to claim 1, wherein the determining, by the first node based on a priority of the second node and a priority of the first information, whether to interrupt transmission of second information comprises:
when the priority of the second node is lower than a priority of the first node, the priority of the first information is higher than a priority of the second information, and the first information is second-type information, determining, by the first node, not to interrupt transmission of the second information.

7. The method according to any one of claims 1 to 6, wherein the method further comprises:
resuming, by the first node, transmission of the second information after preset time.

8. The method according to any one of claims 1 to 7, wherein the method further comprises:
determining, by the first node, the priority of the second node based on any one of a media access control MAC address, an internet protocol IP address, and a network identifier of the second node.

9. A power line communication PLC apparatus, wherein the apparatus comprises:
a transceiver unit, configured to receive first information from a second node, wherein the second node is any node in the at least three nodes other than the first node; and
a processing unit, configured to determine, based on a priority of the second node and/or a priority of the first information, whether to interrupt transmission of second information, wherein the second information is information currently transmitted by the first node.

10. The apparatus according to claim 9, wherein the processing unit is specifically configured to:
when the priority of the second node is higher than a priority of the first node, determine to interrupt transmission of the second information.

11. The apparatus according to claim 9, wherein the processing unit is specifically configured to:
when the priority of the first information is higher than a priority of the second information, determine to interrupt transmission of the second information.

12. The apparatus according to claim 9, wherein the processing unit is specifically configured to:
when the priority of the second node is higher than a priority of the first node, and the priority of the first information is higher than a priority of the second information, determine to interrupt transmission of the second information;
when the priority of the second node is equal to a priority of the first node, and the priority of the first information is higher than a priority of the second information, determine to interrupt transmission of the second information; or
when the priority of the second node is higher than a priority of the first node, and the priority of the first information is equal to a priority of the second information, determine to interrupt transmission of the second information.

13. The apparatus according to claim 9, wherein the processing unit is specifically configured to:
when the priority of the second node is lower than a priority of the first node, the priority of the first information is higher than a priority of the second information, and the first information is first-type information, determine to interrupt transmission of the second information.

14. The apparatus according to claim 9, wherein the processing unit is specifically configured to:
when the priority of the second node is lower than a priority of the first node, the priority of the first information is higher than a priority of the second information, and the first information is second-type information, determine not to interrupt transmission of the second information.

15. The apparatus according to any one of claims 9 to 14, wherein the processing unit is further configured to:
resume transmission of the second information after preset time.

16. The apparatus according to any one of claims 9 to 15, wherein the processing unit is further configured to:
determine the priority of the second node based on any one of a media access control MAC address, an internet protocol IP address, and a network identifier of the second node.

17. A power line communication PLC apparatus, wherein the apparatus is used in a first node in a PLC system comprising at least three nodes, the at least three nodes are in a full-duplex working mode, the apparatus comprises a processor and a memory, the processor is coupled to the memory, the memory is configured to store a program or instructions, and when the program or the instructions are executed by the processor, the apparatus is enabled to perform the method according to any one of claims 1 to 8.

18. A computer-readable storage medium, wherein the computer-readable storage medium stores a computer program or computer instructions; and when the computer program or the computer instructions are run, the method according to any one of claims 1 to 8 is implemented.

19. A computer program product, wherein the computer program product comprises computer program code; and when the computer program code is run, the method according to any one of claims 1 to 8 is implemented.

20. A power line communication PLC system, comprising the PLC apparatus according to any one of claims 9 to 16.
